(19)

Europäisches
Patentamt
European
Patent Office
Office européen
des brevets

(11) **EP 4 568 224 A1**

(12) **EUROPEAN PATENT APPLICATION**

(43) Date of publication:
**11.06.2025 Bulletin 2025/24**

(21) Application number: **23214668.8**

(22) Date of filing: **06.12.2023**

(51) International Patent Classification (IPC):
***H04L 51/02*** (2022.01)   ***H04L 51/214*** (2022.01)
***H04L 51/216*** (2022.01)

(52) Cooperative Patent Classification (CPC):
**H04L 51/02; H04L 51/214;** H04L 51/216

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Koninklijke Philips N.V.
5656 AG Eindhoven (NL)**

(72) Inventors:
• **TALGORN, Elise Claude Valentine
Eindhoven (NL)**
• **SYED, Aly Aamer
Eindhoven (NL)**
• **VAN OORDE-GRAINGER, Shaun
5656AG Eindhoven (NL)**

(74) Representative: **Philips Intellectual Property &
Standards
High Tech Campus 52
5656 AG Eindhoven (NL)**

(54) **A METHOD AND SYSTEM FOR CONTROLLING CHATBOT BEHAVIOR IN A CONVERSATION BETWEEN REQUESTER AND DOMAIN EXPERT**

(57)     System (CBS) and related methods. The chatbot system (CBS) is capable, on a handover signal, to hand over an earlier conversation with a human requester (P) to a conversation of requester with a human expert (DE). The system (CBS) intercept a conversation input issued by the human expert. The system modifies, based on the, or an earlier, conversation between the chatbot system and the requester, the intercepted conversation input. The system relays the so modified conversation input to the requester. The system may facilitate a conversation between requester and human expert.

**FIG. 1**

**Description**

FIELD OF THE INVENTION

The invention relates to a chatbot system, to related method, to a system of training a machine learning model for use in such a chatbot system, to a related machine learning training method, to an arrangement including such a chatbot system, to a computer program element and to a computer readable medium.

BACKGROUND OF THE INVENTION

Generally, a chatbot is a computing arrangement that may be used to offer a "human mimicking" interface to a user of an electronic device. Such chatbot can help in interactions through audio or text input and display methods through such electronic devices. Chatbots may use certain algorithms to accomplish this. Chatbots may be used to simulate how a human would behave as a conversational partner.

Some chatbots use sophisticated natural language processing systems, but many simpler ones scan for keywords within the input and follow a simple "if/then" logic to formulate a reply with the matching keywords. Alternatively, they may offer the most similar wording pattern, from a database or by offering selections from which to choose a response to the user.

As recently as 2019 chatbots fell far short of being able to pass the Turing test, which evaluates effectiveness of a machine in mimicking human behavior. This appears to have changed with the use of "foundation models", such as LLMs (large language models) that did pass the Turing test on same occasions. See C Biever, "ChatGPT broke the Turing test-the race is on for new ways to assess AI" in Nature vol 619, Issue 7971, pp 686-689 (July 2023).

Such or similar chatbot systems are powered by "artificial intelligence" (machine learning). Such chatbot systems may have the ability to (optionally) repeatedly learn from user requests and improve their knowledge base and performance with the number of interactions.

Chatbots are used for a variety of purposes, such as for allowing accessing information effectively and quickly, for entertainment, for social purposes, such as providing companionship by having a conversation, or for customer services where chatbots can answer customer queries, etc. Chatbots are also used in the medical domain, for fielding patient questions, providing medical guidance, triage, etc.

Chatbots have made their way into the health sector, not least because they help easing the burden on already stretched thin medical workforce. Chatbots may facilitate faster i) medical diagnosis, ii) answering of health-related questions, iii) booking of appointments, and other tasks. For example, chatbots can also help as a "virtual nurse", by reminding patients to take their medication, or by contacting human carers, when a patient is not responding, etc.

Medics, in particular front line doctors, may spend considerable time in patient counseling, by ideally being a compassionate listener and answerer, and serving as a patient educator or "explainer" on complex medical topics. Such topics may include discussing treatment options, for example in light of diagnostic information, such as of medical imagery (X-ray, MRI, PET) and/or related radiology reports, or lab reports listing all kind of measurements, etc. The doctor-patient conversation may instead or in addition be based on discussing patient's symptoms, and elucidation of the next steps for the patient to take, etc.

A machine learning ("ML") based chatbot can be trained to learn the "doctor's way" of communicating, and can apply it to multiple patients at the same time, thereby relieving their human counterpart doctor(s) to some extent from online conversation duties, so they can attend to other tasks.

An ML learning based chatbot may be able to provide sympathetic responses and explanations that the human doctor may otherwise need to provide many times over. In addition, the ML learning based chatbot can trigger the human doctor to step in for more complex interactions. The ML learning based chatbot can also perform initial triage to so infer which specialist doctor should be reached out to when patient calls in, etc.

However, it has been found that not all is well with such chatbot support, in particular in the medical domain. It has been observed for example, that a good number of chatbot supported patient conversations lead to dissatisfaction from patients, with patients not actually benefiting. Conversations may terminate prematurely, for example due to patient frustration, prior to the point where actual advice could be provided. The overhead, such as data traffic and energy needed to manage a communication channel over an electricity powered telecommunications (data) network is thus in many cases expended in vain, with little or no utility (usefulness).

SUMMARY OF THE INVENTION

There may therefore be a need for more efficient use of chatbot systems, in particular, but not only, when used in telecommunication networks.

An object of the present invention is achieved by the subject matter of the independent claims where further embodiments are incorporated in the dependent claims. It should be noted that the following described aspect of the invention equally applies to the related method, to the system of training the machine learning model for use in such chatbot system, to the related machine learning training method, to the arrangement including such chatbot system, to the computer program element and to the computer readable medium.

According to a first aspect of the invention there is provided a chatbot system (also referred to herein simply as "bot", for brevity) capable, on a handover signal, to hand over an earlier conversation with a (human) requester, to a conversation of requester with a human expert, and capable to:

- intercept a conversation input issued by the human expert,
- modify, based on the, or an earlier, conversation between the chatbot system and the requester, the intercepted conversation input, and to
- relay the so modified conversation input to the requester.

The said earlier conversation may have been preferably one between the chatbot and the said requester. The "requester" may specifically be referred to herein as the "patient" in the medical domain applications as are envisaged herein in some embodiments.

The conversation (thread(s)) may be enabled over a telecommunication network to which a respective device of requester and human expert is coupled. The chatbot is likewise configured via suitable network interfacing circuitry/arrangement to communicate via the network and thus taking part in the conversation.

The conversation input may include a natural language reply/response, question, etc. The said "conversation" may include a thread of conversation elements (questions, phrase, sentences, etc), with some such conversation input/elements depending on one or more earlier ones.

In embodiments, the said relaying of the conversation input is in response to a release signal.

In embodiments, the release signal is issuable by the domain expert or the chatbot system.

In embodiments, prior to the relaying, the chatbot system capable of indicating to the domain expert the modified conversation input.

The indicating may include posting, displaying, sounding out or any other way of communication.

In embodiments, the conversation is via any one or more of text, audio and video.

In embodiments, the chatbot system is implementable based on a trained machine learning model.

In embodiments, the machine learning model includes a natural language model. A foundation model may be used, trained on a log of earlier conversations threads.

The ML model may be configured for sequence-2-sequnce processing, in particular for natural language processing. The model may include an attention mechanism with trainable parameters. The attention mechanism is capable of modelling context, such as relationship(s) between elements of a sequence (such as a phrase, or sentence as in the conversation input/output) and/or between elements of different such sequences. The said sequences may be input or output of model, or may relate to intermediate data by the model in the course of processing the conversation input into the conversation output. The ML model is preferably capable of processing such sequences, preferably with such attention mechanism, at least in parts, if not fully, in parallel.

In embodiments, the machine learning model is at least partly based on an artificial neural network architecture.

In embodiments, the to modify the conversation input includes to modify a conversation style of the conversation input, based on a conversation style of the, or a, earlier conversation (thread).

Such "conversation style" may include any one of language use, choice of words, vocabulary, structure of sentences, grammar, etc. In addition, such as conversation style may be based on topics covered, so as to avoid repetitions of asking earlier asked questions or question to essentially the same effect as before. In the following, when reference is made to "style", this is a shorthand for "conversation style".

In embodiments, the to modify the conversation input is so as to mimic a, or the, style of the earlier conversation. The earlier conversation may be prior to handover, and the conversation style in the earlier part of the conversation thread may be that of the bot. Thus, on handover, the modification is so that domain expert can "mimic the bot. Thus, the bot n handover assist domain expert to mimic the bot's style. Thus, input of domain expert in their conversation style ("doctor's style)" is modified into a conversation style of the bot ("bot's style"), as used by the bot prior to handover in bot's conversation with patient.

In embodiments, the to modify the conversation input includes removing at least one repetition based on the earlier conversation.

In embodiments, the to relay the modified input includes to post some on an electronic message board facility.

In embodiments, the domain of the said domain expert is medical.

In another aspect there is provided an arrangement including any one of more of: the chatbot system of any one of the above-mentioned aspect or embodiment, and any one of more of: i) the message board facility, ii) a device through which the requester is capable of taking part in the conversation, a device through which the domain expert is capable of taking part in the conversation.

The respective device may be computing devices, such as lap/desktop, smart phone, tablets, or any other electronic device enabled to engage in (tele)communication.

In yet another aspect there is provided a training system capable of training the machine learning model.

In yet another aspect there is provided a method of operating a chatbot, comprising:

- on a handover signal, to hand over an earlier conversation with a requester to a conversation of requester with a human expert, intercepting a conversation input issued by the human expert,
- modifying, based on the, or an earlier, conversation between the chatbot system and the requester, the intercepted conversation input, and
- relaying the so modified conversation input to the requester.

In another aspect there is provided a method of training or testing a machine learning model.

In another aspect there is provided a use of a trained machine learning model in a system as per any one of the above mentioned aspect or embodiment, or in the arrangement, or in any one of the methods.

The bot may use plural machine learning models, The models may differ for use pre-and post handover. The pre-handover model may be an autonomous converser model, trained on medical topics. The post-handover model is one of a conversation style-translator, optionally and preferably also trained on medical topics. The pre-handover model may be used as a pre-trained model, which is then trained on additional training data to obtain. In any case, the training data for the post-handover model may be based in earlier conversation samples, that involved the specific domain expert, and sample that involved the pre-handover model.

In another aspect there is provided a computer program element, which, when being executed by at least one processing system, is adapted to cause the processing system to perform any one of the methods.

In another aspect there is provided at least one computer readable medium having stored thereon the program element, or having stored thereon the trained machine learning model.

The proposed system, arrangement and methods may be of particular benefit in the following example medical setup: patient (requester) initiates a chat conversation with a health service provider, or the health service initiates such communication. The initial response comes from the chatbot that starts conversing with the patient. Naturally, because the conversation usually relates to some form of health-related problem, there is some uneasiness, tension, as the patient may be already in a fragile, vulnerable state. Thus, the patient's state is one where they would rather have a comforting and reassuring conversation. They may want someone to listen to them attentively and give considerate responses to their queries, as opposed to "clinical" responses that the patient may perceive as blunt. However, in most cases, a chatbot is geared to try gathering as much information as possible, such as symptoms, medical history etc. At a certain point through the conversation thread, the chatbot may decide that a human doctor should step in and converse with the patient.

It has been found that in such as handover situation, where bot hands over to doctor, a discontinuity in conversation styles may occur that can lead to conversation breakdown. Two scenarios are possible: the patient can be informed explicitly that a "real" (human) doctor is taking over from the chatbot, or the patient may be kept in ignorance whether they are conversing with the chatbot or with a real person (doctor or other medical professional). In either case, when the human doctor takes over from chatbot, the patient may notice the change in conversation style. They may find that quality/style of conversation has changed. This discontinuity that may make the already stressed patient even more uncomfortable.

At any rate, the handover creates a period where the patient has to adapt to the new interlocutor. The handover may antagonize the patient, as the doctor, when stepping in, will need to dispose of the conversation as quickly as possible, may ask matters already asked by the bot, may ask questions either too technical or too simplistic, thus adding annoyance to discomfort: a "toxic" mix it has been found, with a real risk of conversation breakdown. This may happen, if the bot was trained to converse in a compassionate style, whereas the specific doctor's style is more blunt, in a matter-of-fact style. Or the other way around, in which the particular bot's style is rather technical, blunt, whereas the doctor converses in more compassionate conversation style. The latter situation is welcome of course, but nevertheless, the style change may still be apparent, thus leading to conversation breakdown. Thus, in the latter case, the "damage is already done", and even a more compassionate-styled doctor stepping may then not be able to prevent the conversation breakdown, not least because of the general uneasiness of patient.

The proposed chatbot system addressed the need for an effective solution to guide the doctor stepping in a chatbot discussion, based on the knowledge that the chatbot has already gathered.

What is proposed herein is a chatbot system, configured to help the (human) domain expert (eg, doctor, medical professional, etc.) formulate appropriate responses when they take over a conversation with a patient that was initiated by the chatbot ("bot").

For example, as per the proposed system, the chatbot starts conversing with patient. At a certain point, the chatbot or other entity decides that human domain expert (for simplicity and example's sake referred to herein as "the doctor") should take over the conversation. At this transition of the conversation control, the chatbot is operable to translate doctor originating messaging, having a different conversation style than the bot's pre-handover, into the said bot's conversation style, thus smoothing the bot-to-doctor transition.

Thus, the chatbot after relinquishing the conversation to the doctor, keeps monitoring the conversation between the chatbot and the doctor to provide assistance in formulating the messages for doctor.

The chatbot may monitor the messages provided by the doctor and may help the doctor to adapt them by modifying same, such as by rephrasing into the bot's prior used style, pre-handover. For example, the bot may replace words in the message with more appropriate words, so as not to annoy or make the patient uneasy.

The bot may choose more appropriate language or grammatical structure, while taking into account the mental state of the patient, the medical literacy level of the patient, etc, so that the patient remains at ease while conversing with the doctor.

In some embodiments, the chatbot analyses the conversation between the patient and the doctor and tries to assess the mental state of the patient for example through language analysis and offer assistance to the doctor to help them formulate queries and responses to the patient in appropriate language and style, taking the assessed mental state into account.

The bot may inform the doctor if a question has already been asked and the answer is known so that the patient is not annoyed by repeated question.

The chatbot may analyze the conversation between the patient and the doctor to suggest to the doctor to provide some extra information depending on the different stages of a conversation, and also to help identify the most appropriate sequence of queries to the patient.

In addition, the chatbot may provide, initially, on handover, to the doctor a summary of the conversation with the patient in an easy-to-understand format, such as by using in some examples, medical diagnostic flow charts or medical ontology, to so format conversation to some extent. The doctor is thus clued in on what has been discussed so far, what the problems are, what the symptoms provided by the patient are, etc.

Thus, the bot allows the doctor to "mimic" the conversational style of the bot who has conducted the conversation with the patient before handover. In this way, a smooth transition is achieved, and the patient will not perceive that handover has actually taken place. Thus, from the requester's perspective, there is complete "transparency", where doctor and bot work seamlessly, as if speaking through "one voice" to the requester user, who is potentially vulnerable and under a heightened stress/anxiety state.

The proposed setup fosters a smooth transition, without style discontinuity, or least where such discontinuity is reduced, or even minimized, thus increasing the likelihood that the patient "hangs in there", until conclusion, for better utility per unit of telecommunication network operation effort (electricity, etc) spent.

The modification/conversation style translation has been found to increase comfort and communication efficiency, as the prevalence of disrupted communication threads may be appreciably lower with the proposed approach.

The operation of the bot is preferably one where the content of the messaging is basically retained, whilst it is the style that is changed, in order to effect the smooth transition between the communicating parties, the doctor and the chatbot on the one side, and the patient on the other. However, content may also be changed, such as by removal of duplicative matter, already asked/discussed pre-handover.

The modifications/style translation produced by the bot may be rejected or accepted by the doctor. Thus, the doctor may retain overall control.

This system can also be used in maintaining consistent communication when patients are transferred between different doctors and specialists. Thus, each specialist's different style, may be modified into the bot's style for consistency. The bot may retain a bank of ML models, one for each such domain expert.

This system can be used in any chatbot applications, where a human user (domain expert) takes over a conversation with another human user (patient), and where such conversation was is initially with chabot. Applications may include:-

- Coaching (lifestyle, nutrition, sleep, ...)
- Medical emergencies (triage)
- Elderly care (companionship, care at home)
- Rehabilitation (cardio, etc)
- Care journey companionship (smart medicine dispensing, cancer care support, chronic respiratory diseases, diabetes, etc).

Whilst reference herein throughout is mainly made to some medical applications, scenarios and domains, and such is indeed a preferred embodiment, other medical applications, and indeed applications outside the medical realm are not excluded herein in alternative embodiments. Such applications outside the medical field envisaged herein may include back-office knowledge support of fieldworkers in engineering projects, construction, exploration, installation of technical equipment, maintenance/repair of aircraft, automotive, marine, etc.

*"user"* relates to the requester (eg patient) or the domain expert ("doctor"), who attempts to provide domain knowledge to requester.

In general, *"machine learning"* includes a computerized arrangement that implements a machine learning ("ML") algorithm to adapt a machine learning model that is configured to perform a task. This adaption is called "training. Task performance by the ML model improves measurably, the more (new) training data is used to train the model. The performance may be measured by objective tests when feeding the system with test data. The performance may be defined in terms of a certain error rate to be achieved for the given test data. See for example, T. M. Mitchell, "Machine Learning", page 2, section 1.1, McGraw-Hill, 1997.

*Chatbot /dialog system,* may be understood as a computing system capable of conducting at least in part autonomously dialogue with human user /requester. This may or may not pass the Turing test, although in some cases it will. ML is preferred herein, but simpler tabular based implementation with keyword-match based look-up at various levels of sophistication are not excluded herein, at least for some auxiliary question answering, such as fact retrieval for a given patient, eg medical record lookup, etc. Different models having different architectures, and/or are trained on different training data sets, may be used for pre- and post-handover. Thus, the chatbot system may comprise plural ML models. The chatbot may also comprise non-ML elements.

BRIEF DESCRIPTION OF THE DRAWINGS

Exemplary embodiments of the invention will now be described with reference to the following drawings, which, unless stated otherwise, are not to scale, wherein:

Fig. 1 shows a schematic block diagram of a dialog or chatbot system as may be used herein in embodiments;
Fig. 2 is an illustration of the concept of a conversation style as pertains to language;
Fig 3 is a timeline of interactions between a requester and a chatbot;
Fig. 4 is a timeline of interactions between chatbot, domain expert, and requester;
Fig. 5 shows a flow chart of a computer implemented method of controlling operation of a chatbot system as may be used herein to facilitate a conversation between two parties;
Fig. 6 is a training system for training a machine learning model; and
Fig. 7 is a flow chart of a computer-implemented method of training a machine learning model for use in a chatbot.

DETAILED DESCRIPTION OF EMBODIMENTS

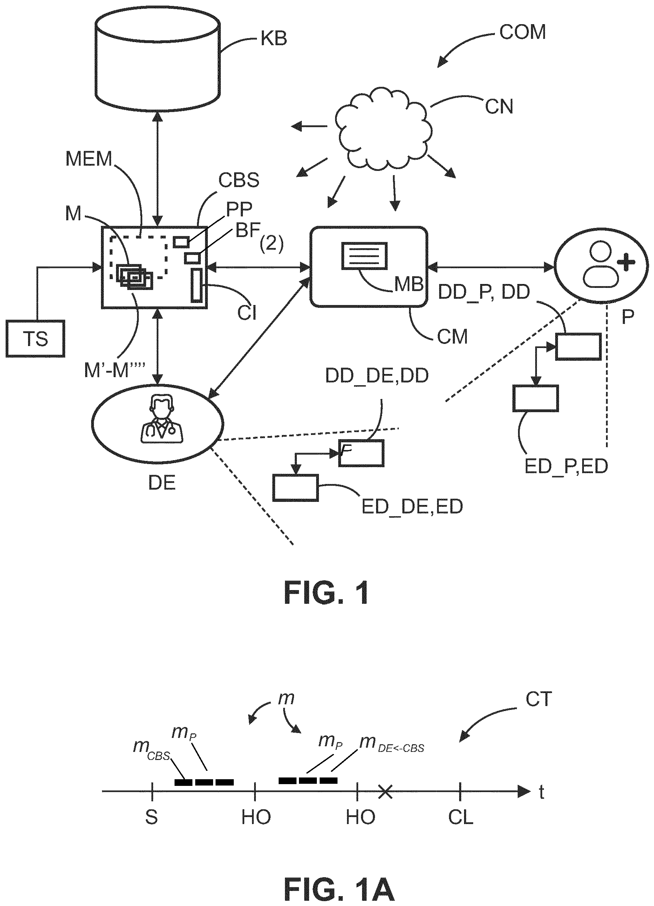

Reference is now made first to Fig. 1 which shows a schematic block diagram of a (tele)communication system COM. The communication system COM may be arranged to include a dialog or chatbot system CBS. The chatbot system CBS will be referred to herein simply as chatbot system CBS ("chatbot CBS" or even "simply "bot" CBS) for brevity, but this is not to exclude other computing based dialog systems.

Broadly, the chatbot CSB is configured to facilitate communication between at least two parties, referred to herein as the domain expert DE and the requester P. Both, the domain expert DE and the requester P are humans, natural persons. The chatbot system CBS may be used in the medical domain for example, where the requester P, such as a patient (and such they will be referred to herein in the future for the sake of example only), requests information from the domain expert DE, such as a medical professional, a doctor, nurse, consultant, etc. For the sake of brevity, the domain expert DE will be mostly referred to herein simply as the "doctor" DE. However, such designation does not imply that the domain expert must necessarily be a medical doctor registered with relevant professional bodies (Royal College of GPs, etc) to practice, although this may well be preferred herein. Thus, the domain expert may be referred to herein simply as "doctor", but such reference herein should be construed as synecdochical.

Equally, the shorthand designation "patient" does not imply that the natural person P is indeed registered in a medical facility, such a hospital, GP practice. The person may or may not be so registered. Any person wishing to call in for medical domain advice may be referred to herein as the "patient P".

The requested information may relate to a remote diagnosis, suggestions on how to proceed in light of certain symptoms, such as advice on whether or not to attend A&E, or await a GP appointment next morning, or pop in the nearby pharmacy, etc. In other example, medical reports/findings, such lab reports, or medical image data is discussed as patient asks for explanations. The system CBS may be used in triaging. The system CBS may be used especially by cash strapped national health systems, where the ratio between patients and doctors is usually very high. For example, it is not unusual for a GP to serve between one and two thousand patients per year, with in excess of thirty contacts per day, at least at times. The BMA recommends a 25 contacts per day limit. More contacts can quickly lead to work overload for any single medical processional, and this may cause an underperforming health system overall, such as due to wrong diagnosis, late intervention. Lower life expectancy across the population may be one of the regrettable results, with larger ratio of preventable death cases. Enter the proposed chatbot system CBS, configured to allow a given health professional DE to more efficiently handle, safely and securely, a larger patient workload.

The proposed chatbot system CBS may be machine learning based, and this is indeed preferred. The chatbot CB may use a suitably trained machine learning ("ML") model M as will be explored in more detail further below. The chatbot system CBS may include the model M, and computational/communication supporting infrastructure, such as (volatile and/or non-volatile) memory MEM, input/output/network interfacing circuity CI, bus systems, and processor circuitry (CPU, GPU, or other computing chip(s) ), in order to run /apply the model M.

The in- and output interfacing CI may allow communicatively coupling of trained model M via a communication network CN to patient P (requester), and the (one or more) domain expert DE. The training may be done in one or more cycles via an ML training system TS ("training system" for brevity). Once trained, the chatbot CBS preferably works alongside the domain expert DE to field questions from the patient P. For communication via network CN, Doctor DE and the patient P may use respective end-devices ED_D, ED_P, each comprising respective display and/or other transducer devices DD, DD_E, DD_P, and each suitably configured for network communication, having a suitable communication interface. Each device may include a processor (CPU) for processing data, and respective memory, I/O circuity etc. to facilitate, if not enable, such processing. Thus, each such device may be a computing device, such as lap- or desktop, smartphone, tablets, smartwatch, etc. The devices may differ in kind for patient P and doctor DE.

Communication between patient and doctor may run as said over the communication network CN which may be wired, wireless or a hybrid as a combination of the two. A communication medium CM may facilitate the communication between the two parties DE, P. In some embodiments the communication medium CM may include an electronic message board MB through which the parties can exchange messages. Messages can also be exchanged by any other communication means and set-up. Parties DE and P may also communicate directly without an intermediary such as the communication board, in point-to-point fashion. Communication may be through a messaging service, text messaging, emailing or any other. Communication may be in text form such as posting or exchanging of ASCII files or data, or may be in the form of speech or video. In the latter case, the end device my include suitable transducers (such speakers, microphones, (video) cameras, etc), and suitable interfacing/conversion circuitry (such as A/D , D/A, etc), with associated signal processing, speech recognition, filtering, noise management etc.

The overall set-up of the chatbot system CBS may be cloud based, at least partly in particular in view of the computational load that may be involved in running the machine learning model M in deployment, post training. In some cases, learning is ongoing which may likely consume even more CPU resources. In other words, at least part of the chatbot system may be arranged on the cloud on one or more servers. Distributive computing may be used to balance the computing work-load. The user devices, such as the end device ED_P of the patient P, and the communication device EP_DE of the doctor DE, may thus be arranged as "thin clients", with relatively low computational burden asked of the two. Thus, the end devices ED_P and ED_DE may preferably be used for initiating and maintaining the communication by receiving or sending messages as needed via suitable receiver/transmitter circuitry and interfacing. The devices ED_P, ED_DE may be arranged in particular to manage the various OSI ("Open Systems Interconnection" standard)-layers (or similar), of the relevant communication protocol. The protocol could be any of a suitably kind, as needed. The devices ED_P, ED_ DE may be operable to effect suitable transduction operation so as to provide/indicate the messages to the user P, DE. For example, in text-based messaging, such transduction may include displaying the respective message on the screen of respective display device DD, or by sounding out message by activating speakers, etc.

Referring now in more detail to the chatbot CB, this facilitates communication between the doctor DE and the patient P. More particularly, the chatbot system works alongside the doctor DE. In addition, the chatbot may conduct some of the communication with the patient P autonomously, at least at times. Thus, the chatbot system facilitates the users, patient P and doctor DE, to engage in a conversation. The conversation may be in real-time setting. However, this does not exclude delayed (eg, buffered) conversations, as is indeed envisaged herein in some embodiments, and as will be explained in more detail below.

The conversation comprises a sequence of natural language (NL) messages sent between the two parties to each other. Thus, the chatbot system CBS, in particular its ML model M, may be configured herein for NL processing NLP. A respective message between the parties DE, P may be a respective phrase, a sentence or a set of sentences, paragraphs etc. In the following, main reference will be made to text-based natural language communication, although the principles as described herein are of equal application to speech and video communication. For this, as said, suitable transducer interfaces on either side DE, P may be needed to generate audio/video, and for audio/video footage capture, etc.

The sequence of messages, also referred to herein as a conversation/communication thread, are usually alternating between the parties with one party P, DE sending one message via device ED_P, ED_ D, and then another message coming in by the other party DE, P as received by their respective device EP_D, ED_ P, and so forth. One message is usually based on the content of the previous one or more messages.

The proposed chatbot system CSB allows a single doctor DE to serve a possibly large number of patients. This is achieved by the chatbot conducting autonomously at least parts of the conversation with each or some patients. The doctor DE need not be involved, at least not throughout the entirety of the conversation thread, but may "chip in" here and there when and if needed. The communication with each of the one or more patients may run concurrently. Thus, the chatbot system may be able to support plural conversation threads with respective patients P, relating to a single doctor DE. However, engaging plural doctors for a given one (or more) patient is not excluded in particular complex cases.

A computational infrastructure, such as one or more cloud servers that share/balance computational workloads when running the underlying (or more more) machine learning model M may be beneficial for a low latency, responsive user experience on either side. Parallelization, using computing system with multi-core chip sets, either generic or dedicated such as GPUs or other, may be leveraged herein usefully for some ML models, such as artificial neural network ("NN") based models or those using attention mechanisms in sequence-to-sequence mapping applications, as in NLP envisaged herein in some embodiments.

In yet more detail on how the chatbot system CBS operates, it is envisaged herein that at certain point(s) in time during the conversation thread there is a handover, where the chatbot usually starts out the conversation and then hands over the conversation thread to the (human) doctor DE to continue. There may one or more handovers. Thus, "Rebouncing" is not excluded herein, where the conversational thread is handed back by the doctor to the chatbot, in order to take over matters deemed of lesser urgency that do not necessarily require the doctor to step in, etc.

The doctor DE does step in when a handover signal is issued by the chatbot for a doctor DE to take over. This handover signal may be issued when there are sensitive matters emerging in the conversation, or when manifestation of an emergency may become apparent based on the information divulged by the patient so far in the conversation thread. Handover signal may also be issued by doctor DE through their device ED_D, who may have observed the on-going patient vs bot conversation thread, and at some point feels he/she needs to take over.

The bottom portion of Fig. 1, inset Fig. 1A, shows as an exemplary timeline of such conversation thread CT, comprising plural messages $m, m_P, m_{DE}, m_{CBS}$, from conversation participants DE, P and bot CBS, including doctor messages $m_{DE<-CBS}$ modified by bot CBS, as will be explained in more detail hereinbelow. The communication thread CT may start out at in time at starting point S when initiated by either party, may proceed through one or more handovers HO, to then ideally conclude at conclusion CL at later point in time. Each section of the timeline may relate to multiple messages exchanged.

The entire conversation thread CT may take a number of minutes, but may also run longer, such as 10s of minutes, half an hour, even for hours, as needed.

One typical communication thread scenario is that there is a single handover HO where in the first part of the thread, prior to the handover HO, the conversation is conducted between patient P and the chatbot CBS in an automated/autonomous way, that is, without active conversational involvement by doctor DE, although doctor DE may follow message stream by reading along in the background at times. After handover HO, the conversation thread is continued by the doctor who takes up the conversation thread, and ideally seamlessly continues the conversation with patient P. The chatbot CBS in this post-handover section of the thread may still continue to be involved by supporting the doctor DE to run the conversation as will be explained shortly. Briefly, the chatbot CBS at handover may be understood as taking up a moderator role. Handover may occur in between two messages for a more seamless transition.

A concluding thread is preferred, where at. or by the end of the messaging, at concluding time point CL, the domain expert DE is capable of formulating a set of recommendation(s) for the user P, based on the information gathered from patient P in the conversation thread CT. Thus, there may be concluding threads that do conclude at such conclusion point CL. Such conclusion may be confirmed, where there is a message coming in from the patient that confirms that the recommendation has been understood such as "*Thank you*", *"Okay",* etc. However, sometimes the communication thread is conclusive, but is not-confirmed, eg because user P left the conversation. In still less desirable cases, there are disrupted communication threads as indicated by "X" in Fig. 1A. In such disrupted threads, the domain expert was not able to formulate a concluding strategy or advice for the patient. This situation may be caused by the communication being disrupted due to equipment glitches. However, in other cases, and of main concern herein, it is the user P becoming frustrated during the course of the thread CT, and is no longer willing to continue the conversation. Such disruptive communication thread may be confirmed by the user that they no longer wishes to continue, or such disruptive communication is simply ended by the user P, effectively "hanging up" or dropping out by choice. Concluding communication threads, whether or not confirmed, are preferred over disrupted communication threads. If concluding, confirmed concluding threads are preferred over non-confirmed ones. Disrupted threads are undesirable. The proposed chatbot CBS is configured herein to help lower the likelihood for such disrupted, non-concluding, threads to occur.

It has been observed, especially in the health sector, that disrupted communication threads can be quite prevalent in particular in times of stress, such as during pandemics or other emergency situations, but not only then. Such disrupted communication (threads) may come at a considerable cost, when scaled up across the population. First there is the health cost, as patient may not act on the advice which was intended for them, but could not be conveyed. And then there is the carbon footprint of such disrupted conversation with low/no utility: electricity or network CN traffic density that was spent to maintain the conversation thread was essentially done so in vain in most cases, if thread does not conclude but is disrupted. If there was no disruption, but conclusion, the same carbon footprint may still have been spent, but at greater utility, because now the there is some likelihood user may act the in the medically advised manner to so reduce, down the line, health costs. Whilst the carbon footprint of each individual email for example generated in the course of such a conversation thread may be negligible on its own, in the order of 0.5 grams of CO2, this quickly becomes considerable when scaled up across regions, countries or continents even. For example, NHS England alone experiences 300 million consultations per year. Electrical expenditures for maintaining such a communication thread includes energy to operate transmitter/receiver circuity, network switching gear and packet routing along the network communication paths, memory maintenance, etc.

Thus, it is preferred herein, in order to save electrical energy, or to lessen network traffic at low utility (usefulness), etc, that a larger proportion of conversation threads are concluded rather than disrupted. This results in an improved utility vs expenditure ratio. The utility of the efforts spent in terms of electric energy, traffic etc, may be justifiable when there are mainly concluding communication threads, as opposed to a share of disruptive threads, where this expenditure was essentially done in vain in most cases.

Thus, the chatbot herein is configured to increase the utility ratio, given the computational and storage expenses involved in maintaining conversational threads over telecommunication network CN. This is achieved by reducing Applicant-identified causes for some such communication thread disruptions. Applicant has discovered that such causes include the handovers HO, as such may be perceived by user P as not being heard or taken seriously. The user may feel that at such handover the conversation is starting all over again, if there is perceived discontinuity in the conversation thread caused by the handover. Thus, such disruptions X may occur if the user initially starts out a conversation with chatbot CB, but it is only at handover that the (human) doctor DE takes over. Thus, a discontinuity at handover may occur. If unattended to, this discontinuity is sometimes acutely perceived by user P as a change in conversation style. This conversational style change may frustrate the user, who, in the medical context, is often at a heightened stress level, and may feel such conversation style discontinuities more keenly than in normal circumstances, less fraught with stress. For example, the language used, the general set-up and formulation of questions and answers, etc. will, if not mitigated by the proposed chatbot step, change and possibly be upsetting to some users. Such discontinuities in prior chatbot supported setups, such as in call centers etc, is suspected as one cause for disrupted threads. An example of such perceived discontinuity is when essentially the same question is being asked by the doctor again as has been previously asked by the chatbot.

In order to alleviate the above "discontinuity-in-conversation-style" problem, the chatbot CB is arranged herein to ensure a smooth transition at handover. especially from chatbot to domain expert when they take over the conversation from the chatbot. A similar smoothing of transition action can be achieved at re-bouncing, when the conversation is handed back by the doctor to the bot CBS, as may happen in some scenarios.

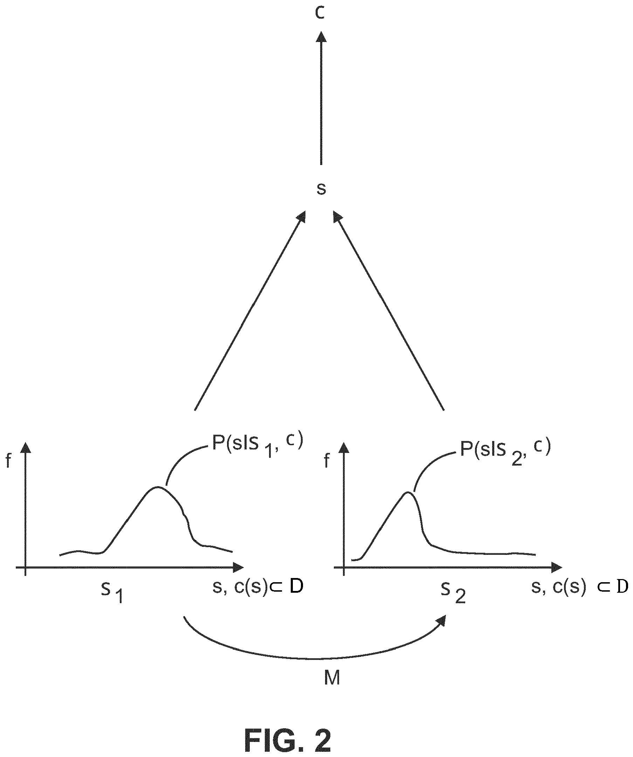

Reference is now made to the schematic diagram of Fig. 2 which explains the concept of "conversation style" in more detail. A change in conversational style between bot CBS and human user DE, engaged in conversation with a third party such as requester/patient P may cause annoyance and may ultimately cause premature disruption X of conversation threads CT, which is to be avoided herein.

This can be done by configuring the chatbot CB in a manner that the conversation style is essentially maintained and appears, for the user P, seamless. Thus, there is a smooth transition at handover HO from one conversational style of the bot to the conversational style entertained by the human doctor DE, or the other way around in rebounds, if needed. Thus, in some instance, the bot system CBS is configured to suggesting to the domain expert DE a modified (eg, corrected or paraphrased) message in response to the domain experts own formulated message to patient's incoming message. When accepted by domain expert, or unconditionally (although this less preferred), it is the so modified message that is then relayed to patient P for consumption, instead of the response the doctor had formulated. The model M of bot CBS is trained on previous conversations with the said patient (or other patients). The previous conversations are stored in knowledge memory KB, such as database. The said previous conversations may include some or all messages accumulated in the current (ongoing) thread CT thus far, and/or may include messages from previous threads. The training may commence whilst the conversation thread is ongoing. This may be referred herein as *"hot training"*. Training may be done on a copy of the current model, which is hot-swapped-in to replace old model from previous training cycle, possibly in-between messages of current thread CT, once this current training cycle concludes. More than one such training cycle may be run during the conversation thread. Alternatively, training is delayed until bot CBS is idle, in between deployments.

Turning now to Fig. 2 in more detail, this explains the concept of conversational style, based on linguistic concepts as introduced by others, such as F. de Saussure ("Cours de Linguistique Générale", 1916*)*. Conversational style may be understood in terms namely of a "signifier" $s = (s1, s2, ....sT)$) and the "signified" $\chi$. The signifier s, as opposed the signified" $\chi$, is an arrangement that signifies the latter. The signified $\chi$ is a concept, meaning, etc, which one communication party may wish to convey to another. The signified may include a relevant medical concept, a set of facts, thoughts, medical advice, etc such, as may occur in the patient vs bot/doctor communication thread(s) CT. The signified $\chi$ is conveyed to the receiving party, such as patient P, by other party, such as doctor or bot CBS, via the signifier s. The exchanged messages are formed from such signifier(s) s. The signifier s may be a set/sequence/string of basic (alphabet) signifiers sj, such as characters, letters (including "white space" characters), and/or combinations thereof. Signifier s may relate to word fragments, such as N-grams (N>2), sometimes referred to as "token", etc. The signified $\chi$ may relate to a set of some or all signifiers which relate to the same signified concept. The set of signifiers gives rise to a dictionary D, including the basic signifiers $sj$ (the alphabet), and concatenations c(s) thereof, such as words, sentences, paragraphs, etc. The dictionary D of a more general kind may include a set of tokens (2-grams, etc) over an alphabet, etc. There may be length limit set on (string) length of signifier.

A conversational style may be understood as a family of conditional probability distributions, conditioned, respectively, on a hidden state, eg parameterized as $\sigma_1, \sigma_2, \ldots \sigma_k$, and on the underlying concept $\chi$ to be expressed. Each conversation style may be understood as clusters (to which a respective one of the hidden states $j$ relates) of such conditional probability distributions $P(s|\sigma j, \chi)$ over a given dictionary $D$ (the set of signifiers s and its concatenations $c(s)$). Merely two such hidden states $\sigma_1, \sigma_2$ are illustrated in Fig. 2.

Thus, a given conversation style may relates to a cluster of related conditional probability distributions over concepts (the signified) $\chi$. The probability distributions $P(s|\sigma j, \chi)$ may be thought of as probability distributions over the dictionary D. Marginals may be formed by summing over all or some concepts/"signifieds": $\Sigma_\chi P(s|\sigma j, \chi)= P(s|\sigma j)$. Different conversation styles may thus be identified as hidden states of such (marginal) conditional probability distributions P(s|$\sigma j$), or as parametrizations of $P(s|\sigma j)$ over $\sigma j$. Thus, the parameters $\sigma j$ may relate to different conversation styles. The parameters $\sigma j$ may be identified by the parameter and/or the probability distribution it ($\sigma j$) parameterizes. The probability distribution $P(s|\sigma_j)$ are shown in Fig. 2 as per their respective conditional density f, that have different peaks (concentration of probability mass) over different words, sentence constructions, etc, in the dictionary D, thus representing the different conversation/language styles $\sigma_{1,2}$. The respective conversation styles $\sigma_{1,2}$ may be distinguished by defining a distance measure $d(\blacksquare, \blacksquare)$ in the space of probability distributions, such cross-entropy or Kulback-Leibler distance, or others. Any two such marginal conditional probability distributions P(s|$\sigma_j$) over D may thus be said to represent different conversation styles, if their distance exceeds a given threshold $\varepsilon$, $d(P(s|\sigma_1), P(s|\sigma_2)) > \varepsilon$. Thus, a conversational style may be understood as marginal probability distributions over a given agreed dictionary s. The above may be extended to speech and video, by including additional dimension(s) for prosodic elements, or body language, etc.

The machine learning model M herein is configured to facilitate a change in communication style $\sigma$. The model M may be configured to translate language received in one style $\sigma 1$ into language in another style $\sigma 2$. Thus, for example, a phrase in a particular doctor DE's conversation style $\sigma 1$, may be translated into the style $\sigma 2$ of chatbot CBS used prior to handover. As envisaged herein, this style translation may be understood as a rephrasing, to so "mimic" the style of the bot CBS exhibited during the earlier part of the conversation before handover. This style-translation as intended herein does not necessary include translating form one natural language (Saussure's *"langue"*) such, as English, into another such as Italian. The *langue* is thought herein to be maintained. However, such style-translation may include rephrasing certain figures of speech, Idioms, dialect specific usage, etc. Thus, a doctor using Scots, may find that some of the messages end up rephrased by the bot, if the bot did not use Scots in the initial part of the conversation. However, the messaging remains in English for example, despite the style-translation. Having said that, embodiments of bot CBS model M may indeed include translation even into different *langues* (eg, from Italian into English), as this allows international deployment where doctor's from one country can be called in to assist patients in another country for example.

Less formally, a conversational style may include a choice of words, vocabulary, grammatical structure etc, that is entertained, predominantly used by, a given communication participant, such as the doctor DE, or the chatbot CBS. The conversation style of chatbot may be understood as the combined conversation styles as learned from respective corpus of training data on which bot CBS was trained on.

Thus, what is proposed herein is a chatbot system CBS using an ML model M configured to translate into different conversational styles. The bot system hands over an ongoing conversation thread at one point, based on an issuance of a start/handover signal. Handover signaling may be implemented as interrupts /event handlers, etc, which may or may not bet part of bot as such. Handover signal may be issued by user interface through user, or may be issued by bot CBS itself. Thus, doctor who was following thread in the background without active involvement, may wish to step in and issue handover signal.

As to the automated handover signal issuance, this may be triggered on specific keywords that enter the conversation thread. The handover signaling facility may itself be implemented as a machine learning model, trained on a corpus of expert annotated phrases for example that, in the respective domain, would warrant such handover to human domain expert to continue the conversation, due to the nature, sensitivity, complexity etc that arose in the course of the conversation thread. Thus, handover signal may be issued automatically given the context of the messaging, or may be otherwise be initiated as needed, for example by a human supervisor or any other as mentioned above.

The handover signal, whichever way issued, manually or automated, causes the bot CBS to switch into style-translation/rephrasing mode, thus leaving the earlier (pre-handover) mode, in which it was actively, in a patient facing manner, taking part in the actual conversation.

In the style-translation mode, it is the human doctor that conducts/continues the conversation thread, but now with the assistance of the bot CBS. Thus, the bot CBS is now no longer autonomously generating messages in response to patient P messages, but instead receives messages from doctor DE. The so received doctor DE-originating messages are translated into the previous conversation style of the bot, and it is only the so translated messages that are passed on to patient P. Thus, a buffering may be involved where the doctor messages after handover are intercepted by an event handler/the bot CBS, and are then so translated, before being passed on the patient P. Thus, the original doctor DE's message in and of itself is not forwarded to the patient, only the style-translated message is in its stead. In this manner, a seamless/"smoothed" handover is effected, seamless in conversation style that is, without (or at east reduced) conversation style discontinuity. Requester user P may nor perceive that it is now (after handover) the human doctor that is messaging instead of bot CBS, thus reducing likelihood of the above mentioned disrupted ( "X" ) communication threads CT.

In general, the machine learning model M of the chatbot CBS may be operable in two phases mainly in a learning/training phase, and in a deployment phase.

Broadly, during the training phase, an ML training algorithm is used to train the model based on training data. This training allows the model to perform the above mentioned conversation style translation/conversion function. Once sufficiently trained, the model can then be used in a real-life clinical environment, eg, in supporting a real-life communication thread between patient P and doctor DE. Each doctor may one or more chatbots CBS that have been trained on the respective communication style for the given doctor. This allows more rapid deployment.

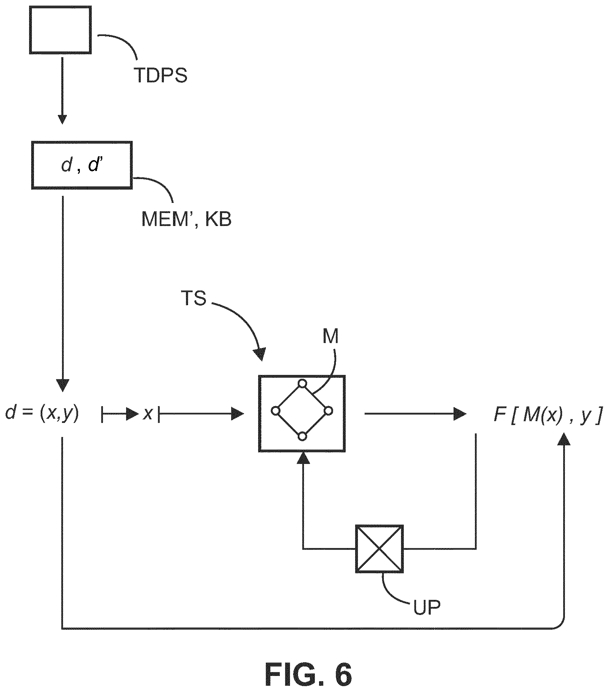

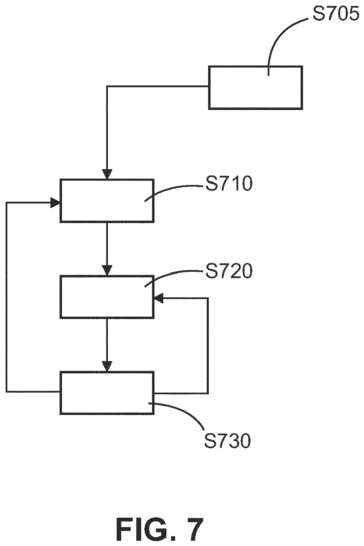

The training may proceed in multiple cycles or can be done in single cycle. Preferably, training in multiple cycles is done, such as pre-training, where a training result (state or parameters of model as obtained in a prior training cycle) of the prior cycle are used in the next cycle. Briefly, training is based on training data that may be stored in a memory, storage, etc such as a knowledge-base KB. Such training data may include recordings of previous communications between the specific doctor DE, and one or more other patients not necessarily the patient P in the current consultation. However, in terms of pre-training, the training language corpus may also include recorded scripts of conversation threads from other doctors. These may be used in pre-training. Additional training cycles, for training fine-tuning, may then be based on scripts that involve the specific doctor DE, for whom the model is ultimately envisaged for use. Aspects of the training will be described in more detail below at Figs 6,7.

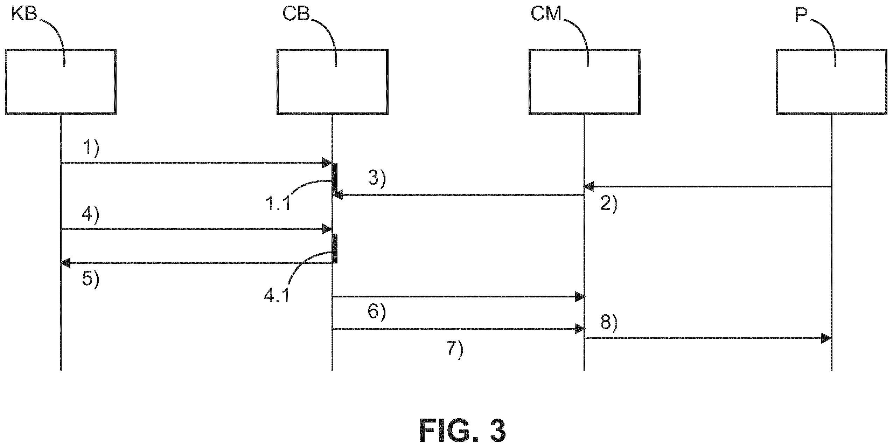

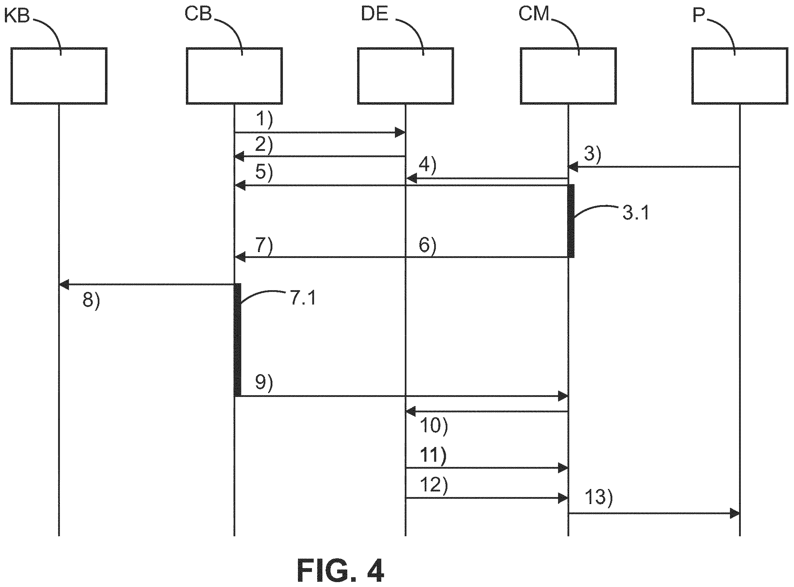

Reference is now made to Figs 3 and 4 which show timelines illustrating the functions described above of the chatbot system CBS. Broadly, Fig. 3 relates to a "break-in period" where the doctor is as yet not actively involved, but where the conversation is run by the chatbot only. Fig. 4 shows a timeline of message exchanges after the doctor has taken over, with conversation now facilitated by bot in terms of conversation style translations/conversion, but where the conversation is being taken part in by domain expert issuing messages. Thus, in Fig. 3, bot CBS outputs are in response to prompts (messages) by requester user (patient) P, whilst in Fig. 4 the outputs are in response to prompts (messages) by doctor DE, which are translated/rephrased into previously used (Fig. 3) "bot-style". Not all messages need to be translated however, although this may well be done in some embodiments. If a particular message happens to conform to "bot-style" as is, it can be passed on without translation. Thus, Figs 3,4 may be understood to represent two different operational phases, one pre-handover (Fig. 3), and one post-handover (Fig. 4). Frequent reference will be made below to the said to phases, pre- and post-handover. The chatbot system CBS may use different ML models M, M' for the two phases, one model M' pre-handover. and one model M post-handover (of main interest herein). Both models may be combined into one supermodel if needed, also referred to herein with reference symbol "M".

Turning now to Fig. 3 in more detail, interactions may proceed follows. At 1) the chatbot CBS initializes (1.1) itself reading the information stored in its Knowledgebase. At 2) patient P starts a conversation with the chatbot, eg by writing to Message Board, a query. Use of message board MB is optional, although preferred as doctor can follow conversation as a passive observer at this stage. At 3) the chatbot CS reads Patient's query from Message Board. At 4) chatbot may read from its Knowledgebase KB and uses its model M' to formulate, at 4.1), appropriate response(s)/messages to the patient. Chatbot CBS does this autonomously. No involvement of doctor DE at this time. At 5) Chatbot CBS may log, or cause log, a history log of the conversation thread in Knowledgebase KB. The Chatbot may use an algorithm to assess a mental state of mind of the patient P, and logs its assessment into the Knowledgebase KB. This algorithm may be simply keyword based, or may be set up as an ML model in its own right, or in any other state. The statement may simply be a score over scale , such as *1-10*, with *0="relaxed"* ... *10 = "highly agitated"*. At 6) chatbot CBS forward its response to patient P, such as by writing its response to the Message Board. At 7) Chatbot may buffer its response for review by doctor DE. Thus may be accomplished in the message board context, or others, by executing a "Make Visible" (MV) function so that patient P can see the response written. For example, message is actually posted. At 8) patient P reads the response from the Chatbot, responds, and so on., starting over with 3) above.

Turning now to Fig. 4 in more detail, post-handover, this phase may include any one or more of the following interactions. It is this phase that is main interest herein. At 1) chatbot CBS, at a certain time during the conversation patients P, decides to request human doctor DE to take over the conversation thread. The Chatbot may provide a summary to the Doctor of the conversation that has happened so far with patient. The summary might include text and/or visuals of the conversation's dynamic, patient's state of mind, cognizant on other profile characteristics. At 2) Doctor DE, on receiving a request signal for hand over, takes over control and informs the Chatbot about this action and by so doing informs chatbot that the Make-Visible can now only be executed by the Doctor DE, and no longer by chatbot CBS. Thus, suitable permission flags are set. At 3) patient subsequently writes or otherwise communicates a next message/ query to the Message Board. Patient may or may not be informed of handover. 4) Doctor DE reads the Patient's message. 5) chatbot CBS may also read-in Patient's message. 6) Doctor DE formulates a response to the Patient on the Message Board at 3.1), but optionally without making it visible to the Patient, eg through the use of the MV function. Use of MV function is optional herein, but preferred. At 7) Chatbot reads the response that the Doctor has formulated on the Message Board for the Patient. 8) Chatbot may modify the doctor formulated message. To do this, chatbot may consult Knowledgebase KB, and formulate at 7.1) a suggestion of a new message, optionally and preferably, for review by doctor DE by writing this to message board at 9), invisible as yet to patient. This suggestion/modified message is meant to maintain the previous bot conversation style, thus making the transition/handover of the conversation from the Chatbot to the Doctor "smooth". so that the Patient remains at ease, or at least is not further stressed. The Chabot may use machine learning model M at 8) to make this style-translation/modification. Bot CBS's style-translator Model M, in making the modification, may do any one or more of:

- replace some words in the response from the Doctor with more appropriate words so as not to annoy or make the patient uneasy, and possibly mention to the Doctor why he should not use these words with the Patient, eg, by bringing to doctor's DE attention past reactions of patient P.
- choose more appropriate language while taking into account an assessed mental state of the patient, the medical literacy level of the patient, etc. as assessed by the Chatbot as described above at Fig. 3, so that the patient remains at ease while conversing with doctor.
- inform doctor DE if a question has already been asked and the answer is known so that the Doctor can view this information for their diagnostic purposes and not annoy the Patient by repeated questions.

Thus, in 8) the chatbot may analyze the conversation between the patient and the Doctor and may attempt to assess mental state of the patient for example through language analysis and offer assistance to the Doctor to help formulate queries and responses to the patient in appropriate language and style. The Chatbot may analyses the conversation between the patient and the doctor to suggest to the doctor to provide some extra information depending on the different stages of a conversation, and also to help identify the most appropriate sequence of queries to the patient.

Continuing now with the timeline of Fig. 4, at 10) Doctor reads modified message as provided by chatbot CBS off message broad. At 11) Doctor DE may then either a reject or accept the bot-modified message. If rejected, doctor may maintain or reformulate their original message. If accepted, doctor may release 12) modified message for posting in message board. At 13) patient may read message. Flow may then restart at 3). If rejected, doctor's original message or their reformulated message, is posted at 12), thus the doctor DE essentially overriding bot CBS.

Thus, as is shown above in Figs 3,4, the chatbot system may be configured to support a "moderator" option with the MV function. Thus, in with this MV function /mode, the chatbot CBS generated responses can be overseen by doctor DE, with conversation thread delayed, with messages stored in a buffer BF. The message are slated for posting on message board, but not yet made available for patient P. Thus, thanks to the buffered MV function supported herein in some embodiments (but not all), the doctor DE may have the opportunity to quickly review the responses and, if appropriate, may release them for publishing as needed. Thus, the doctor DE may step in and correct some ill formulated responses that may be caused by the chat board especially in its early learning or training stages.

A similar delay and buffered moderation option with MV function may be run when the doctor is actively involved (Fig. 4) and where doctor's responses are translated by the chatbot's machine learning model M into chatbot's style as used initially when commencing the thread. Thus, in this embodiment, the machine learning model M is able to translate messages to be sent by the doctor in the doctor style, into another style mainly that of the chatbot, with optional review by doctor DE. Thus, again a buffering BF may be used so that the chatbot generated messaging is not immediately posted or forwarded to the user for consumption, but is first displayed to the doctor or medical expert for (quick) review and, if need, re-editing, such as a text editor function. Doctor DE they can then manually reject or accept the proposed re-phrased message in chatbot style, using the MV function.

As mentioned, the bot CBS may include multiple ML models M,M', suitably trained. Different models M,M' may be used for different phases, such as for pre- and post handover phases, respectfully. There may be the style-translator /modifier ML model M, for post-handover phase, or main interest herein. In addition, there may be the autonomous converser model M' for use in pre-handover phase. There may be more than two models for chatbot CBS, or they may be single model (also referred to herein by sign "M") that combines plural of said, or other functions. Thus, there may be another model (M''') to estimate patient's levels of anxiety, whereas yet another model, a summarizer M'''', summarizes the previous messages from patient into summary of a fixed length (number of tokens), which may be displayed to doctor on handover. The summary may facilitate doctor's "quicker growing" into the ongoing conversation thread CT. Thus, a "bank" of ML models may be used by chatbot CBS. The chatbot may orchestrate and manage, based on signal issuance (interrupts, etc) and event handler, activation/deactivation of the various models during or in-between phases of the conversation thread CT. In some other embodiments, some or all of the above models are part of a single super ML model, as needed.

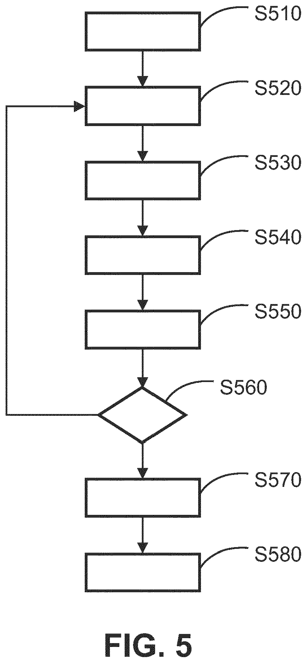

Reference is now made to Fig. 5 which shows a flow chart of a computer-implemented method of controlling a chatbot system in a conversation between two parties, the requester P and the domain expert DE. Whilst the terminology herein is consistent with the one used in Figs 1-4 before (and Fig. 6 below), it is understood that the principles and steps described below are not necessarily tied to the computational architectures as shown in the Figures above. That is, the methods herein (including ML training flow chart at Fig. 7 below) may be understood as teachings in their own right, implementable by one or more computing systems as needed.

The method may assume an ongoing conversation thread CT, initially between the chatbot CBS, and the patient P at step S505. Thus, in this phase the chatbot generates preferably messages autonomously, in response to message(s) received from the patient P. The chatbot may be machine learning based. No doctor is actively involved in this stage, thus, does not participate in the conversation. The bot CBS operates autonomously in conversing with patient P at this time. The doctor however may follow at least portions of the conversation at least at times, if needed.

At step S5 10 a handover signal is issued either by the bot, the doctor or any other entity (external event handler, etc), in order for the doctor DE to take over the ongoing conversation thread.

After such handover signal, a message for the current thread sent by the doctor is intercepted at step S520 by the bot or a related control mechanism such as an event handler in communication with a bot interface.

At step S530 the intercepted message may be modified. The modification may include at said step S530 style-translating/rephrasing the doctor's message from a first conversation style as used by the doctor (the native style of this particular doctor), into a second conversational style as used by the chatbot in the communication thread prior to handover at step S505. Step S530 may be based on a trained machine learning model M to effect the translating from one style into another, as mentioned above. Preferably, the ML model is trained to translate doctor's conversation style into bot conversation style, as used by bot prior to handover.

In addition, or instead, the modifying S530 may include edits, such as removing duplicative matter that has already been asked or referred to in the pre-handover phase of the communication thread, to preempt upsetting/boring user and risking disruption of communication thread. Such removal can be done in principle by a keyword-based monitoring and search which does not necessarily involve the use of machine learning model as envisaged for conversation style-translations. However, an ML model setup can still be used herein for this aspect also.

At step S550 the so modified message is then relayed to the user for consumption such as for display, sounding out, etc.

Optionally, there is an intermediate buffering step S540, in which the so modified message is first displayed, or is otherwise brought to the attention of the doctor for approval. If doctor approves of the proposed modified message, is it released or relayed at step S550 as said. The doctor may use UI signaling to effect such release, such as by click or touchscreen action, keyboard event, or in whichever way.

At step S560 it is checked whether there are more messages incoming in the current thread. If this is the case, flow returns to step S520 where a new message of the doctor is intercepted and the above repeats, and so on.

If, on the other hand, at step S560 it is concluded that the conversation thread terminates, operations end at step S570.

At optional step S580, the conversation thread is stored as log file or otherwise in a memory. This allows producing new training data, which then may be used in future training cycles to retrain, fine-tune the model as needed.

As earlier mentioned, the modifier step S530 is preferably machine learning based. Thus, the trained machine learning model M is used to effect the modifying, in particular the style translation from doctor's style to bot style as used in the prior pre-handover part of the communication thread at S505. Thus, the model assisted modifier operation S350 is run to allow doctor to "mimic" the bot who took part in the earlier/initial conversation thread. Translation style changes can be avoided to at least reduced so that most patients would not understand there was a *"bot-2-doctor"* handover.

This modifier operation S530 may be done by the same ML model that conducted the pre-handover conversation. Alternatively, the modifying is done by a separately trained model M, geared for style translation. Thus, both models M,M' may work in tandem, each operating differently in their respective operation phases (pre- and post-handover), one model M' to autonomously conduct the conversation with patient, and one (model M) that effects style translation, preferably doctor style to pre-handover bot-conversation style.

For the message modifier step S530, in particular for style-translating task, the respective machine learning model M is thus of sequence-to-sequence type ("seq2seq"). In Incoming (input) sequential data, for such is message, is transformed into outgoing (output) sequential data (output message) in a conversation style different from the conversation style of the input message. In general, sequential data includes data elements (tokens), and the sequence as a whole (eg, its meaning) is position sensitive, that is, is sensitive to the order in which the elements appear in the respective sequence. An example of this is human language as used herein by bot and doctor, and indeed by patient. Thus, the machine learning model may be capable of natural language processing as indeed is envisaged herein. The input may be supplied in suitable form such as written language (text), as ASCI file, but other formats such as audio (speech) or video is not excluded herein. Suitably reformatting pipelines with A/D, D/A may be needed.

In preferred embodiments, a large language model ("LLM") is used for the style-translator model M, as has been recently proposed. See for example, A Vasvani et al in "Attention is all you need", available online at arXiv preprints/eprints, https://arxiv.org/abs/1706.03762, under reference code 1706.03762 [cs.CL] (2017).

The model M may be based at least in parts on an artificial neural network (NN). In embodiments, an at least partly convolutional network is used (CNN). In other embodiments, the model may be fully connected as opposed to being convolutional, as needed. Hybrid modelling is also envisaged herein, where the NN model is convolutional in some part(s), and fully connected in other(s).

Neural network ("NN") architectures, whether fully connected or convolutional, include computational nodes, having parameters. The nodes may be arranged in a data structure of computational layers, in a cascaded fashion. Thus, intermediate data produced by the layers is passed from one layer to the another, until final output (the conversation style-translated message) emerges at the output layer. Thus, input (eg, message by doctor) received at an input layer is propagated through hidden layers, in between the input layer and output layer, to produce the output at output layer, such as the message in a language of the sought after translated into conversation style, namely that of the chatbot pre-handover. There may be a plural number of such hidden layers, thus giving rise to a "deep" ML model. In CNNs, the nodes may be arranged as convolution filter operators. Non-linear activation layers may be used in CNN or fully connected NNs.

In embodiments, the model may be arranged in an encoder/decoder structure. For example, when model has an NN architecture, some NN layer may form encoder, and, downstream thereof, some NN layers from the decoder. Whichever architecture is used, the model is preferably of the generative type. Thus, the model is trained on training data to learn statistical patterns. Preferably, a probability distribution of the dictionary D is learned, and the model is capable of sampling from the distribution to so generate samples, such as messages, in the conversation style of interest. Generative type ML models as mainly envisaged herein, are in distinction to models of the discriminative type, which are of lesser interest herein, but may still be used for some other aspects herein, as will be explained in more detail below.

In the proposed chatbot setup, model input is thus a message produced by the doctor for example, and the output is a message (in text, audio or video), that relates to the input message in terms of meaning/content, but expresses the same or similar content in a different conversation style, namely in the conversational style the bot CBS has used in the initial/earlier stage(s) of the conversation thread, pre-handover.

In some embodiments, an attention mechanism may be used, instead of, or in addition to, convolutional layers. The attention mechanism may be multi-headed, for better, that is parallel, processing.

Thus, the proposed method may not require previous approaches, such recurrent or LSTM (long short-term memory) networks, etc, that were restricted to sequential processing. Thus, the attention mechanism-based model as envisaged herein, despite being configured to processing sequential data, does not proceed itself in a sequential manner when processing the same, but allows parallel processing.

The attention mechanism is a computational device that allows encoding and processing, sequential data, such as language (messages) whilst accounting and modelling for context across the input. Thus, attention mechanism processing allows establishing relations between different tokens in a message for example, with giving more weight to pairs of tokens, even when they are far apart in the sequence, than to tokens that are in closer spatial proximity. Such relations can also be expressed for elements from different messages, or between elements of the intermediate data, which may also be sequential data. The intermediate data emerges as the model processes the input message into the output message. Parameters of the attention mechanism are preferable trainable, thus from part of the model's parameters $\theta$ which are adapted during training.

The output of the machine learning model may be a probability distribution over a dictionary D, such as the "universe" of signifiers $s, c(s),$ Such dictionary D or vocabulary may for example comprise words, or word fragments more generally, such as tokens, eg, N-grams (eg, $N = 2$ or more). Based on a conditional probability distribution, given one or more of the earlier generated tokens in the output message, the next token is output and so forth, until the complete output, that is the message in bot conversation style, is so generated. The total length in terms of token of the required output sequence (message) can be preset. For each position, using the current conditional probability, the token with the highest probability over the dictionary D is output, and so on, for some or each position. Instead of relying solely on magnitude of probability mass for output generation, a more qualified approach is also envisaged, where a selection is made from among the tokens on which k% of the probability mass is concentrated. Thus, a token that may not necessarily carry the highest probability in absolute terms may be selected as output, instead of the highest probability scoring token. The selection may be implemented by one of numerous policies.

Language messages as such are generally not amenable for the type pf processing envisaged herein, or such processing be difficult. In order to address this, , the model M may be interfaced with a pre-processing pipeline PP, in training and/or during deployment. Broadly, the preprocessing pipeline PP converts input message into a set of numbers. The preprocessing pipeline PP may tokenize the input message into tokens, such as the said N-gram word fragments, individual letters, symbols or groups thereof, etc. The tokens may be positionally encoded by pipeline PP so as to retain track, in a modelling channel, the relative order in which the tokens are arranged in the input sequence and/or during their processing by the model. Such positional encoding may be done by indexing or by mapping into other spaces, based on a set of parametrized trigonometric functions for example.

The positionally encoded tokens may then be mapped by an embedder of pipeline PP into embeddings. Such embeddings are elements of a potentially high dimensional space, a "meaning space". Such a meaning or embedding space is generally of a vector space structure, where similar words of similar meaning are mapped to adjacent or approximal elements (respective vectors or "point") in that space.

It is those embeddings of the input message (that is, a vectors of numbers), which are fed into the machine learning model for processing, instead of the message as such. The processing by model produces the mentioned over-dictionary (conditional) probability distributions P, which may then be used to sample the underlying dictionary to generate the next output token, until the whole message in chatbot style, at preset or otherwise defined length, emerges at the output layer of the machine learning model M.

Attention mechanism-based ML models, although preferrable, are not the only ones that can be harnessed herein for present conversation-style translation. Whilst the above mentioned recurrent NNs and/or LTSM NNs may be less preferred, embodiments where such are used are not excluded herein. In addition still, other ML models of the generative type may be used instead or in addition, such as GANs, variational autoencoders (VAE), diffusion models, and others still. GANs were described by Ian Goodfellow et al in "Generative Adversarial Networks" (GANs), published on arXiv, under reference code arXiv: 1406.2661 [stat.ML] (2014), available online at https://arxiv.org/abs/1406.2661.

The above-mentioned pipeline PP may be used not only in training, but also in deployment, post-training, or in model testing, as needed.

All that was said above in terms of modelling, may be of equal application to the model M' that is used for the autonomous conversation with patient P pre-handover S505. Thus, a similar model M', such as a LLM with attention mechanism, may be used for model M'. As said, one and the same model may be used pre- and post-handover. If different models are used, the one for pre-handover may be used as a pretrained version, which can be fine-tuned in subsequent training cycle to obtain conversation style-translator model M. The style-translator model M is of main interest herein, and main reference is made herein to this model M. If the model is a combined one (M', M), the same reference sign "M" is used herein for such a model.

If two models are used M,M', this may enable better portability for use by multiple domain expert users DE. It is then only the style-translator model M that may need to be adapted to the given domain expert DE's conversation style. The likely more expensive to train model M' for autonomous conversation pre-handover, which may be an LLM as said, can be maintained throughout different domain experts. LLM model are also sometimes referred to as "foundation models".

Generative type models, such as LLM type models, preferably with attenuation mechanism, may also be used for the summarizer model M'''. The state of mind assessor model M'''' could be of simpler architecture. A generative model may not be needed. A classifier/discriminator type may suffice, trained on labeled text-passages, with labels awarded by experts, such as psychologist, so as to rate, on the mentioned scale, the state of mind in terms of anxiety level.

Reference is now made to Fig. 6 which shows elements of the training system TS as may be used herein, for training based on training data $d= (x,y)$. Training data $d$ may be held in memory MEM', KB. The training data may be collected over previous conversation threads, involving different domain experts DE and/or patients P. The training data may be procured, or synthesized, by a training data provider system TDPS. The training data provider system TDPS may be itself ML based. For example, the training data provider system TDPS may be based on a GAN, or other generative type model.

The model M (or any one of the other models M'-M'''') may be trained by the computerized training systems TS. In training, the training system TS adapts an initial set of (model) parameters $\theta$ of the model M. The initial parameters may be random, are may have been obtained in pre-training in a previous training cycle on different, eg, more specialized or more general, training data. For example, in generative model for text generation, may be trained first on general medical knowledge data, based on websites, reference works (all suitably digitized) to obtain a pre-trained model version. This pre-trained model is the refined by next training cycle, with more specialist domain knowledge data, different from the one used in the pre-training. In a later training cycle, the above mentioned recorded conversation threads in respect of the given ("target") doctor DE may be used, etc. Thus, there may be repeated pre-training.

Once the training cycles have concluded, the learned parameters with which the model architecture is now populated can be stored in one or more data memories MEM' and can be used for deployment, or for the next training cycle. post pre-training etc. Before deployment, one or more test data is processed to evaluate performance. If error rate is within agreed margins, the model may be released for clinical deployment ("inference") and may be used herein by the chatbot system CBS as described herein.

In more detail, it is an object of the training system TS to optimize, and hence adapt, the model parameters $\theta$ based on the training data $d = \{(x, y)\}$ pairs. In other words, the learning can be formulized mathematically as an optimization scheme where the said cost function F is minimized. although a dual formulation of maximizing a benefit function may be used instead.

Assuming for now the paradigm of a cost function F, this measures the error incurred between data estimated by the neural network model M(x) and the associated target y, as per some or all of the training data pairs k:

$$argmin_\theta F = \sum_k || M^\theta(x_k), y_k || \qquad\qquad (1)$$

In eq. (1) and below, function $M()$ denotes the result of the model applied to training input x. The cost function may be based on cross-entropy or Kullback-Leiber divergence or similar.

In general, there is an error between this output $M(x_k)$ and the associated target $y_k$ of the presently considered k-th pair. An optimization scheme such as backward/forward propagation or other gradient based methods may then be used to adapt the parameters $\theta$ of the model M so as to decrease the error for the considered pair $(x_k, y_k)$ or a subset of training pairs from the full training data set. The pairs of training data may be generated by the training data provider system TDPS by automatically processing unlabeled, unstructured, in particular textual data, for example. Thus, a self-supervised training setup may be contemplated herein in some embodiments.

After one or more iterations in a first, inner, loop in which the parameters $\theta$ of the model are updated by updater UP for the current batch (subset) of pairs $(x_k, y_k)$, the training system TS enters a second, an outer, loop where a next training data pair batch $\{x^{k+1}, y^{k+1}\}$ is processed accordingly. The structure and operation of updater UP depends on the optimization scheme used. For example, the inner loop as administered by updater UP may be implemented by one or more forward- and/or backward passes in a forward-/backpropagation algorithm. While adapting the parameters, the aggregated, for example summed, residues of all the training pairs in the current batch is considered, to improve the objective function. The updater UP may user gradient based algorithms, such as conjugate gradients, stochastic gradients, Nelder-Mead, or any other suitable numerical optimization algorithm.

The training system as shown in Fig. 6 can be considered for all learning schemes, in particular supervised schemes, in particular self-supervised (see below for more details). Unsupervised, or reinforcement learning schemes may also be envisaged herein in alternative embodiments. Thus, the above reference to samples in terms of pairs k and the summation over such pairs in (1) is merely for illustration, and is not to be construed as limiting the principles described herein. GPUs or other CPUs with multicore design may be used to implement the training system TS, suitably parallelized.

The above is also applicable to model M', the converser model, which may be trained on more generalist data $d'$, on domain knowledge, as needed.

As mentioned earlier above, in some models, probability distributions over the agreed dictionary D are produced as output. Thus, the cost function $F$ may be configured to allow comparing such probability distributions. For example, the cost function F may include Kullback-Leibler distance, cross-entropy, or other suitable distance functions.

As also mentioned earlier, the training data d may be based on previous conversation thread(s) and/or on the current thread, with ongoing training during use of the model. If there is paucity of (historical) training data, more training data may be synthesized by using ML generator models, such as GANs.

In terms of historical, "real", as opposed to synthesized conversation threads, recordings of such conversation threads may include one or more sequences of messages. Such may be recorded in a "break-in phase", where these conversations are merely collected during bot-supported, or solely doctor DE led sessions, and collated for later use in training of the machine learning model M. The "bot" referred to in the previous sentence, may thus be an earlier trained version of the model M to be trained. Thus, in such a break-in period, the model may remain silent in the background and does not interfere with communications between the doctor and the patient. During this break-in period, the accumulating training data generated by the human doctor DE in exchange with various patients in the past, can already be used in parallel during an ongoing conversation to train the model and/or to run a new training cycle, once sufficient training data is accumulated. This allows building up s stock of existing historical conversation threads. The conversation threads may be stored for a given doctor DE. Thus, the said existing historical conversation threads may include prior conversation threads between a certain given doctor DE (for whom the modem is to be "tailored" to) and plural past patients, with whom the said doctor DE conversed. This may be a large set of prior patients.

As mentioned, supervised training may be used, where the so obtained training data is labelled by a human expert. However, this is likely to be cumbersome and ineffective, given the generally large language training corpus that may be needed for good performance. Thus, instead, self-supervised training can be used, where the training data provider system TDPS automatically loops through the training data messages, and partly masks them to so generate a sufficient supply of training input and targets $d = \{(x,y)\}$. The masked part may be used as target y, whilst the non-masked part may be used as training input x. Thus, the masked part of the message may correspond to the chatbot responses and may be used as targets y, as opposed to the text input x provided by doctor in some previous conversation thread. In this way, even from a relatively modest corpus of previous messages, a large number of training pairs $d = \{(x,y)\}$, can be built up so that the model can be trained efficiently as needed.

In more detail, from said existing historical conversation threads between "target" doctor DE and patients, doctor DE's messages, thus naturally in in that doctor DE's conversation style, may be isolated and earmarked as training input x, but with the patient's messages kept as associated reference messages. These patient-originating reference messages may then be fed into an existing generic medical converser chatbot model M', to be used for the system pre-handover, to so obtain corresponding "bot conversation style" messages y as targets. Using the reference messages as correspondence look-up *"key"*, associated message $x_k, y_k$ pairs may be formed into pairs $(x_k y_k)$, for use in training the style-translator model M for the conversation style translation/modification task S530. Thus, target doctor DE's responses x can be associated ("joined up") with bot responses y, via the key. This joining up of messages may be repeated for some or all reference messages, to so built up the training data set $d = \{(x,y)\}$. The above-described construction of training data may be done by the training data provider system TDPS. The training data provider system TDPS and the training system TS may from part of a super-system, or may each be operable as standalone systems.

The converser chatbot model M's to be used pre-handover may be trained on recorded scripts d' of traditional, human supported, chats comprising doctor vs patient conversation threads, using the same masking schemes in the self-supervised learning. This training may be preceded by pre-raining on more generalist domain knowledge. A similar pre-training can be done for style-translator model M.

Reference is now made to Fig. 7, which shows a flow chart of a method for training machine learning model M.

At step S705 training data is accessed or provided. Historical logs of prior conversation threads (or prior messages from the current thread) may be used, or, when in pretraining, a text corpus of a suitable general domain knowledge is provided. The above mentioned joining up may be used to bult up pairs of doctor vs converser bot model responses.

At step S710, the training input $x_k$ is applied to an initialized machine learning model M to produce training output $M(x_k)$.

An error, of the training output $M(x_k)$ from the associated target $y_k$ is quantified by cost function F. One or more parameters of the model are adapted at step S720 and the errors evaluated at S730 in one or more iterations in an inner loop to improve the cost function. For instance, the model parameters are adapted to decrease errors, as measured by the cost function. Herein, index k may refer to individual pairs of a given batch (subset) of training data, or the index may refer to the batch as a whole.

Once sufficient convergence is established, eg by observing the values returned by cost function F (which a real valued function), the training method then returns in an outer loop to step S710 where the next batch of training data pairs is fed in. Forward and/or back-propagation or similar gradient-based techniques may be used in the inner loop.

The components of the system CBS, or training system TS, or training data provider system TDPS may be implemented as one or more software modules, run on one or more general-purpose processing units, on one or more servers or other computing nodes.

Alternatively, some or all components of the system CBS, or training system TS, or training data provider system TDPS may be arranged in hardware such as a suitably programmed microcontroller or microprocessor, such an FPGA (field-programmable-gate-array) or as a hardwired IC chip, an application specific integrated circuitry (ASIC). In a further embodiment still, system CBS, or training system TS, or training data provider system TDPS may be implemented in both, partly in software and partly in hardware.

The different components of the system CBS, or training system TS, or training data provider system TDPS may be implemented on a single data processing unit. Alternatively, some or more such components of bot system CBS, training system TS, or training data provider system TDPS are implemented on different processing units, possibly remotely arranged in a distributed architecture and connectable in a suitable telecommunications network, such as in a cloud setting, edge nodes. or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

**Claims**

1. A chatbot system (CBS) capable, on a handover signal, to hand over an earlier conversation with a human requester (P), to a conversation of requester with a human expert (DE), and capable to:

   intercept a conversation input issued by the human expert,
   modify, based on the, or an earlier, conversation between the chatbot system and the requester, the intercepted conversation input, and to
   relay the so modified conversation input to the human requester.

2. The chatbot system, of claim 1, wherein the said relaying of the conversation input is in response to a release signal.

3. The chatbot system of claim 2, wherein the release signal is issuable by the domain expert or the chatbot system.

4. The chatbot system of any one of the preceding claims, wherein, prior to the relaying, the chatbot system capable of indicating to the domain expert the modified conversation input.

5. The chatbot system of any one of the preceding claims, wherein the conversation is via any one or more of text, audio and video.

6. The chatbot system of any one of the preceding claims, wherein the chatbot system is implementable based on a trained machine learning model (M).

7. The chatbot system of any one of the preceding claims, wherein the to modify the conversation input includes to modify a style of the conversation input, based on a style of earlier conversation.

8. The chatbot system of any one of the preceding claims, wherein the to modify the conversation input is so as to mimic a, or the, style of the earlier conversation.

9. The chatbot system of any one of the preceding claims, wherein the domain of the said domain expert is medical.

10. Arrangement (COM) including any one of more of: the chatbot system of any one of the preceding claims, and any one of more of: i) the message board facility, ii) a device (ED, ED_P) through which the requester is capable of taking part in the conversation, a device (ED,ED_DE) through which the domain expert (DE) is capable of taking part in the conversation.

11. A method of operating a chatbot, comprising:

on a handover signal, to hand over an earlier conversation with a human requester to a conversation of requester with a human expert, intercepting (S520) a conversation input issued by the human expert,
modifying (S530), based on the, or an earlier, conversation between the chatbot system and the requester, the intercepted conversation input, and
relaying (S550) the so modified conversation input to the requester.

12. A method of training or testing a machine learning model as per any one of claims 6-9.

13. Use of a trained machine learning model in a system of any one of claims 6-9, or in arrangement of claim 10, or in method of claim 11.

14. A computer program element, which, when being executed by at least one processing system (CBS), is adapted to cause the processing system (CBS) to perform the method as per claims 11 or 12.

15. At least one computer readable medium having stored thereon the program element of claim 14, or having stored thereon the trained machine learning model as per any one of claims 6-9.

**FIG. 1**

**FIG. 1A**

FIG. 2

**FIG. 3**

EP 4 568 224 A1

FIG. 4

S510

S520

S530

S540

S550

S560

S570

S580

# FIG. 5

**FIG. 6**

S705

S710

S720

S730

# FIG. 7

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/210033 A1 (HIGGINS MICHAEL [US] ET AL) 30 June 2022 (2022-06-30) | 1-8, 10-15 | INV. H04L51/02 H04L51/214 |
| Y | * page 1, paragraph 2 – page 22, paragraph 170 * | 9 | |
| Y | ----- US 11 431 660 B1 (LEEDS RICHARD [US] ET AL) 30 August 2022 (2022-08-30) * column 1, line 26 – column 64, line 27 * | 9 | ADD. H04L51/216 |
| A | ----- US 2017/006161 A9 (GENESYS TELECOMMUNICATIONS LABORATORIES INC [US]) 5 January 2017 (2017-01-05) * page 1, paragraph 2 – page 20, paragraph 220 * ----- | 1-15 | |

**TECHNICAL FIELDS SEARCHED (IPC)**

**H04L**

The present search report has been drawn up for all claims

| Place of search | Date of completion of the search | Examiner |
|---|---|---|
| Munich | 24 April 2024 | Oteo Mayayo, Carlota |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 21 4668**

This annex lists the patent family members relating to the patent documents cited in  the above-mentioned European search report.
The members are as contained in the European Patent Office EDP file on
The European Patent Office is in no way liable for these particulars which are merely given for the purpose of information.

**24-04-2024**

| Patent document cited in search report | | Publication date | Patent family member(s) | | Publication date |
|---|---|---|---|---|---|
| US 2022210033 | A1 | 30-06-2022 | AU | 2021413748 A1 | 06-07-2023 |
| | | | CA | 3200890 A1 | 07-07-2022 |
| | | | CN | 116648894 A | 25-08-2023 |
| | | | EP | 4272404 A1 | 08-11-2023 |
| | | | IL | 303539 A | 01-08-2023 |
| | | | JP | 2024501052 A | 10-01-2024 |
| | | | US | 2022210033 A1 | 30-06-2022 |
| | | | US | 2023129324 A1 | 27-04-2023 |
| | | | WO | 2022147019 A1 | 07-07-2022 |
| US 11431660 | B1 | 30-08-2022 | NONE | | |
| US 2017006161 | A9 | 05-01-2017 | AU | 2014233357 A1 | 05-11-2015 |
| | | | AU | 2017251686 A1 | 09-11-2017 |
| | | | CA | 2917294 A1 | 18-09-2014 |
| | | | CN | 105229687 A | 06-01-2016 |
| | | | EP | 2973312 A1 | 20-01-2016 |
| | | | KR | 20150131306 A | 24-11-2015 |
| | | | KR | 20170122862 A | 06-11-2017 |
| | | | US | 2014314225 A1 | 23-10-2014 |
| | | | WO | 2014145149 A1 | 18-09-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C BIEVER**. ChatGPT broke the Turing test- the race is on for new ways to assess AI. *Nature*, July 2023, vol. 619 (7971), 686-689
- **T. M. MITCHELL,**. Machine Learning. McGraw-Hill, 1997, 2
- **F. DE SAUSSURE**. *Cours de Linguistique Générale*, 1916
- **A VASVANI et al.** *Attention is all you need*, 2017, https://arxiv.org/abs/1706.03762
- **IAN GOODFELLOW et al.** Generative Adversarial Networks. *arXiv: 1406.2661 [stat.ML*, 2014, https://arxiv.org/abs/1406.2661